# EUROPÄISCHE PATENTSCHRIFT

(11) **EP 4 545 271 B1**
(45) Veröffentlichungstag und Bekanntmachung des Hinweises auf die Patenterteilung: **25.11.2026**
(21) Anmeldenummer: 24189451.8
(22) Anmeldetag: 18.07.2024
(51) Int. Cl.: B29C 49/42, B29C 49/02, B29C 49/06, B29C 49/78

(54) **ANLAGE ZUM HERSTELLEN VON BEHÄLTERN AUS VORFORMLINGEN**
INSTALLATION FOR PRODUCING CONTAINERS FROM PREFORMS
INSTALLATION DE FABRICATION DE RÉCIPIENTS À PARTIR DE PRÉFORMES

(30) Priorität: 25.10.2023 DE 102023129371
(43) Veröffentlichungstag der Anmeldung: 30.04.2025
(73) Patentinhaber: Krones AG, 93073 Neutraubling (DE)
(72) Erfinder: FORSTHOEVEL, Jochen, 93073 Neutraubling (DE); FISCHER, Simon, 93073 Neutraubling (DE)
(74) Vertreter: Grünecker Patent- und Rechtsanwälte PartG mbB

(56) Entgegenhaltungen:
- EP-A1- 2 052 842
- EP-A2- 0 856 392
- EP-B1- 0 813 949
- DE-A1- 102010 049 404
- DE-A1- 102011 053 180
- DE-A1- 102012 101 114
- US-A1- 2022 063 173

## Beschreibung

Die vorliegende Erfindung betrifft eine Anlage zum Herstellen von Behältern aus Vorformlingen gemäß Anspruch 1 sowie ein Verfahren zum Herstellen von Behältern mit einer Anlage gemäß Anspruch 5.

### Stand der Technik

Anlagen zum Herstellen von Behältern aus Vorformlingen sind grundsätzlich bekannt. Diese können in Einstufenverfahren oder in Zweistufenverfahren ausgeführt sein, wobei im Einstufenverfahren Vorformlinge in einer Spritzgussmaschine hergestellt und über eine Transporteinrichtung, die in der Regel sehr kurz ist und die Preforms im definierter Handhabung belässt sowie einen Großteil der Wärme vom Spritzguss erhält, einer Maschine zum Herstellen von Behältern aus Vorformlingen (insbesondere Blasformmaschinen) zugeführt werden. Im Zweistufenverfahren werden die Vorformlinge separat hergestellt und beispielsweise über Transportwege mit Lastwagen den Anlagen zugeführt, die aus den Vorformlingen Behälter herstellen. Auch hier ist aber eine direkte Verbindung von Preformproduktion und Behälterherstellung möglich, der Preform muss aber wieder aufgeheizt und nicht nur konditioniert werden.

Generell beim Verblocken von Preform- und Behälterproduktion hängt die zuverlässige Herstellung der Behälter davon ab, dass die Herstellungsmaschine zum Herstellen der Vorformlinge (beispielsweise einer Spitzgussmaschine) und die Blasformmaschine so miteinander synchronisiert sind, dass sie im Wesentlichen gleichen Durchsatz besitzen. Andernfalls kann es zum Aufstauen der Vorformlinge von der Blasformmaschine oder zum Leerlauf der Blasformmaschine kommen. Beides hat negativen Einfluss auf den Betrieb und insbesondere das Aufstauen der Vorformlinge kann dazu führen, dass diese nicht ausreichend temperiert sind, um zuverlässig zu Behältern ausgeformt zu werden. Somit ist sowohl für das Einstufenverfahren als auch das Zweistufenverfahren ein Aufheizen oder Temperieren der Vorformlinge auf eine bestimmte Zieltemperatur notwendig, aber aufgrund etwaiger Variabilität bei der Zuführung der Vorformlinge mitunter schwierig mit ausreichender Genauigkeit zu erreichen.

DE 10 2011 053180 A1 offenbart eine Anlage zum Herstellen von Behältern aus Vorformlingen, die Anlage umfassend eine Herstellungsmaschine zum Herstellen von Vorformlingen, eine Blasformmaschine zum Herstellen von Behältern aus Vorformlingen, eine Transporteinrichtung zum Zuführen von Vorformlingen aus der Herstellungsmaschine an die Blasformmaschine und eine Speichereinrichtung, der Vorformlinge an einem Entnahmepunkt aus der Transporteinrichtung zugeführt und der Transporteinrichtung an einem Übergabepunkt übergeben werden können, wobei der Entnahmepunkt stromauf oder stromab des Übergabepunktes in Transportrichtung der Vorformlinge in der Transporteinrichtung angeordnet ist, und wobei die Speichereinrichtung eine Temperiereinrichtung zum Temperieren der Vorformlinge umfasst,wobei die Anlage eine Steuereinheit zum Steuern der Temperiereinrichtung abhängig von einer Zieltemperatur der Vorformlinge umfasst,wobei die Vorformlinge am Entnahmepunkt aus der Transporteinrichtung entnommen und über eine Abführtransporteinrichtung der Speichereinrichtung zugeführt werden können und wobei die Abführtransporteinrichtung mit der Transporteinrichtung derart verbunden ist, dass selektiv Vorformlinge aus der Transporteinrichtung im Entnahmepunkt entnommen und der Abführtransporteinrichtung zugeführt werden können, und ein entsprechendes Verfahren.

US 2022/063173 A1 , DE 10 2010 049404 A1, EP 0 813 949 B1, EP 2 052 842 A1, EP 0 856 392 A2 und DE 10 2012 101114 A1 offenbaren andere relevanten Anlagen und Verfahren.

### Aufgabe

Ausgehend vom bekannten Stand der Technik besteht dies zum lösende technischen Aufgabe somit darin, eine Anlage zum Herstellen von Behältern aus Vorformlingen sowie ein Verfahren zum Herstellen von Behältern aus Vorformlingen anzugeben, mit denen ein zuverlässiger Betrieb der Anlage und gleichzeitig eine hohe Qualität der hergestellten Behälter erreicht werden kann.

### Lösung

Diese Aufgabe wird erfindungsgemäß durch die Anlage zum Herstellen von Behältern aus Vorformlingen gemäß Anspruch 1, sowie das Verfahren zum Herstellen von Behältern aus Vorformlingen mit einer Anlage gemäß Anspruch 5 gelöst. Vorteilhafte Weiterbildungen der Erfindung sind in den Unteransprüchen erfasst.

Die erfindungsgemäße Anlage zum Herstellen von Behältern aus Vorformlingen umfasst eine Herstellungsmaschine zum Herstellen von Vorformlingen, eine Blasformmaschine zum Herstellen von Behältern aus Vorformlingen, eine Transporteinrichtung zum Zuführen von Vorformlingen aus der Herstellungsmaschine an die Blasformmaschine und eine Speichereinrichtung, der Vorformlinge an einem Entnahmepunkt aus der Transporteinrichtung zugeführt und der Transporteinrichtung an einem Übergabepunkt übergeben werden können, wobei die Speichereinrichtung eine Temperiereinrichtung zum Temperieren der Vorformlinge umfasst.

Die Transporteinrichtung kann grundsätzlich beliebig ausgebildet sein. Die Transporteinrichtung kann einen Linearförderer (beispielsweise einen Luftförderer) und/oder eine Anzahl von Drehsternen umfassen, die die Vorformlinge von der Herstellungsmaschine zur Blasformmaschine transportieren. Die Transporteinrichtung kann auch eine Sortiereinrichtung umfassen, die die räumliche Anordnung der Vorformlinge nach Verlassen der Herstellungsmaschine zumindest teilweise ändert und eine Übergabe an die Blasformmaschine ermöglicht.

Im Entnahmepunkt und/oder im Übergabepunkt kann eine Weiche oder ein gesteuerter Drehstern vorgesehen sein, der die Vorformlinge je nach Notwendigkeit entweder der Speichereinrichtung zuführt oder in der Transporteinrichtung weiterbewegt, um sie der Blasformmaschine zum Herstellen von Behältern aus den Vorformlingen zuzuführen.

Die Speichereinrichtung kann ein Lagern oder Speichern oder Aufstauen der Vorformlinge geordnet oder ungeordnet ermöglichen. Ein geordnetes Aufbewahren oder Speichern der Vorformlinge kann hierbei insbesondere ein Aufbewahren der Vorformlinge in einer bestimmten räumlichen Orientierung (beispielsweise vertikal hängend) umfassen, wohingegen ein ungeordnetes Aufbewahren der Vorformlinge ein Aufbewahren der Vorformlinge ohne vorgegebene räumliche Orientierung umfasst. Letzteres kann beispielsweise in Form eines Silos oder einer Box oder einer sonstigen Aufnahme für Vorformlinge realisiert sein.

Die temperierten Vorformlinge können aus der Speichereinrichtung grundsätzlich zu einem beliebigen Zeitpunkt wieder entnommen und der Transporteinrichtung zugeführt werden, optional auch wenn die Herstellungsmaschine noch in Betrieb ist, also insbesondere Vorformlinge herstellt. Dies kann beispielsweise abhängig von einer Speicherkapazität der Speichereinrichtung intermittierend zum üblichen Zuführen der Vorformlinge von der Herstellungsmaschine an die Blasformmaschine erfolgen. Ist die Speichereinrichtung voll oder erreicht einen bestimmten Füllstand (beispielsweise 60% oder 70% oder 80%), kann durch Zuführen zumindest einer Teilmenge der Vorformlinge aus der Speichereinrichtung an die Transporteinrichtung (beispielsweise so viele Vorformlinge, dass der Füllstand der Speichereinrichtung auf einen vorgegebenen Wert von höchsten 50% oder höchsten 30% oder einen beliebigen anderen Wert sinkt) ein zumindest teilweises Leeren der Speichereinrichtung erfolgen, sodass diese nicht überfüllt wird. Alternativ oder zusätzlich kann zumindest ein Teil der Vorformlinge abhängig von der Temperatur der Vorformlinge der Transporteinrichtung aus der Speichereinrichtung zugeführt werden.

Alternativ oder zusätzlich kann auch vorgesehen sein, dass beispielsweise in bestimmten zeitlichen Intervallen die Vorformlinge aus der Speichereinrichtung zum Teil oder vollständig abgeführt und der Transporteinrichtung zugeführt werden. Dies kann beispielsweise in vorgegebenen Betriebspausen der einer Prozesstaktung der Herstellungsmaschine erfolgen, ist hierauf jedoch nicht beschränkt.

Die Temperiereinrichtung kann beispielsweise einen oder mehrere Infrarotstrahler und/oder Mikrowellenstrahler und/oder eine Heißluftzufuhr umfassen, um die Vorformlinge zu temperieren, insbesondere auf einer gewünschten Temperatur zu halten. Die Temperiereinrichtung kann auch beispielsweise eine Vielzahl von Heizelementen, wie Infrarotstrahler und/oder Mikrowellenstrahler und/oder Heißluftzufuhren (oder jede andere geeignete Wärmequelle) umfassen, die in unterschiedlichen Bereichen der Speichereinrichtung angeordnet sind, wobei Vorformlinge die Heizelemente bei einem Transport durch die Speichereinrichtung und/oder die Temperiereinrichtung sukzessive bzw. kaskadenartig durchlaufen. Jedes der Heizelemente kann so ausgebildet sein, dass es Vorformlinge auf eine bestimmte Temperatur temperieren kann, wobei beispielsweise in Transportrichtung nacheinander angeordnete Heizelemente von niedriger zu höherer Temperatur in Transportrichtung der Vorformlinge durch die Speichereinrichtung angeordnet sein können.

Es ist erfindungsgemäß nicht zwingend, dass die Vorformlinge in der Speichereinrichtung permanent temperiert werden. Insbesondere muss die Temperiereinrichtung nicht durchgehend aktiv sein, wenn Vorformlinge in der Speichereinrichtung vorhanden sind. Es kann beispielsweise auch vorgesehen sein, dass das Temperieren der Vorformlinge an bestimmte Prozessparameter gekoppelt oder von diesen abhängig ist. Hierzu zählen beispielsweise vorbestimmte Stillstandszeiten der Herstellungsmaschine (etwa vorgesehene Wartungsintervalle oder ein vorgesehenes Betriebsende). Alternativ oder zusätzlich kann auch vorgesehen sein, dass ein Temperieren der Vorformlinge beispielsweise abhängig von den Energiekosten gesteuert wird. Besteht beispielsweise ein Anschluss der Anlage an ein externes Stromnetz (optional ausschließlich mit erneuerbaren Stromquellen wie Photovoltaik und/oder Windkraft), kann die Temperiereinrichtung zu Zeiten eingeschaltet werden, in denen das externe Stromnetz einen Leistungsüberschuss bzw. einen Überschuss an verfügbarem Strom liefert, der den Bedarf sonstiger Verbraucher übersteigt, oder zu denen ein solcher Überschuss wahrscheinlich ist. Somit wird verfügbare erneuerbare Energie effizient genutzt. Gleichzeitig kann dies Vorteile hinsichtlich der Betriebskosten mit sich bringen.

Die Herstellungsmaschine kann grundsätzlich jede Maschine sein, die geeignet ist, Vorformlinge aus einem Vorformlingsausgangsmaterial (beispielsweise PET Pellets) durch beispielsweise Aufschmelzen des Vorformlingsausgangsmaterials und Einbringen des geschmolzenen Vorformlingsausgangsmaterials in eine Form oder in ein Werkzeug herzustellen. Die Herstellungsmaschine kann insbesondere als Spritzgussmaschine ausgestaltet sein, wobei auch andere aus dem Stand der Technik bekannte Varianten, wie beispielsweise einen Compression Molding Maschine zur Anwendung kommen können. Die Erfindung ist diesbezüglich nicht beschränkt.

Mit der erfindungsgemäßen Anlage kann durch Speichern der Vorformlinge und Temperieren der Vorformlinge während des Speicherns auch bei einem Stopp der Blasformmaschine sichergestellt werden, dass die von der Spritzgussmaschine hergestellten Vorformlinge nicht als Ausschuss aussortiert werden müssen, sondern der Transporteinrichtung zur weiteren Verwendung wieder zugeführt werden können. Damit wird der Betrieb der Anlage und die Qualität der hergestellten Behälter verbessert und gleichzeitig Ausschuss minimiert.

Es kann vorgesehen sein, dass der Entnahmepunkt stromauf oder stromab des Übergabepunktes in Transportrichtung der Vorformlinge in der Transporteinrichtung angeordnet ist. Das Zuführen der Vorformlinge an einem Übergabepunkt stromauf oder stromab des Entnahmepunktes kann beispielsweise abhängig von dem Vorhandensein einer Sortiereinrichtung und/oder dem ungeordneten oder geordneten Speichern der Vorformlinge in der Speichereinrichtung gewählt werden, um das zuverlässige Zuführen der Vorformlinge an die Transporteinrichtung sicherzustellen.

In einer Ausführungsform ist vorgesehen, dass die Anlage eine Steuereinheit zum Steuern der Temperiereinrichtung abhängig von einer Zieltemperatur der Vorformlinge umfasst.

Die Zieltemperatur ist eine Temperatur, die die Vorformlinge bei Übergabe an die Transporteinrichtung aufweisen müssen oder von dieser Temperatur abhängen. Zusätzlich kann auch eine Zieltemperatur der Vorformlinge bei Eingabe in die Blasformmaschine als Zieltemperatur gewählt werden oder die Zieltemperatur kann davon abhängen, wie hoch die Temperatur der Vorformlinge bei Zuführen an die Blasformmaschine sein muss und anschließend beispielsweise unter Berücksichtigung der Transportstrecke und der zu erwartenden Abkühlung der Vorformlinge während des Transports die Zieltemperatur festgelegt werden. Die Temperiereinrichtung kann dann hinsichtlich der von ihr abgegebenen Leistung bzw. Wärme so gesteuert werden, dass die Zieltemperatur der Vorformlinge in der Speichereinrichtung erreicht wird.

Es kann hier vorgesehen sein, dass Vorformlinge, die die Zieltemperatur erreicht haben, aus der Speichereinrichtung der Transporteinrichtung zugeführt werden. Dies kann entweder in festgelegten zeitlichen Intervallen erfolgen (beispielsweise können alle 30min alle Vorformlinge in der Speichereinrichtung, die die Zieltemperatur erreicht haben, aus der Speichereinrichtung der Transporteinrichtung zugeführt werden) oder abhängig davon, ob ein oder mehrere Vorformlinge die Zieltemperatur erreicht haben. Diese Ausgestaltung kann vorteilhaft zusammen mit einem geordneten Speichern der Vorformlinge in der Speichereinrichtung realisiert werden, ist darauf jedoch nicht beschränkt.

Hiermit wird die Qualität der aus den gespeicherten Vorformlingen hergestellten Behälter verbessert.

Insbesondere kann vorgesehen sein, dass die Anlage einen Sensor zum Bestimmen einer Temperatur von Vorformlingen in der Transporteinrichtung umfasst und wobei die Zieltemperatur abhängig von der bestimmten Temperatur und/oder von Erfordernissen beim Herstellen von Behältern aus den Vorformlingen mit der Blasformmaschine ist. Die Erfordernisse beim Herstellen der Behälter aus den Vorformlingen mit der Blasformmaschine können beispielsweise eine notwendige Temperatur der Vorformlinge beim Zuführen der Vorformlinge an die Blasformmaschine und/oder einer Heizeinrichtung (Ofen) der Blasformmaschine umfassen. Diese Erfordernisse können beispielsweise zusätzlich oder alternativ zu der bestimmten Temperatur genutzt werden, um die Zieltemperatur der Vorformlinge zu bestimmen. Beispielsweise kann ein Extrapolieren der Abkühlung der Vorformlinge von dem Übergabepunkt bis zu dem Punkt, an dem die Vorformlinge der Blasformmaschine übergeben werden, genutzt werden, um ausgehend von der zu erreichenden Temperatur der Vorformlinge bei der Übergabe der Vorformlinge an die Blasformmaschine die Zieltemperatur zu bestimmen.

Der Sensor kann insbesondere ein thermischer Sensor sein, der eine Temperatur von Vorformlingen bestimmen kann (beispielsweise basierend auf einer von den Vorformlingen abgegeben Infrarotstrahlung und/oder einem Strahlungsspektrum der Vorformlinge). Grundsätzlich kann die Temperatur der Vorformlinge in der Transporteinrichtung an einer beliebigen Stelle der Transporteinrichtung bestimmt werden und die Zieltemperatur von dieser bestimmten Temperatur abhängig sein. Hiermit kann sichergestellt werden, dass die Temperatur der Transporteinrichtung wieder zugeführten Vorformlinge der Temperatur der in der Transporteinrichtung transportierten Vorformlinge entspricht, so dass das Ergebnis beim Herstellen der Behälter möglichst gleich ist.

Der Sensor kann so angeordnet sein, dass er die Temperatur der Vorformlinge in einem Bereich des Übergabepunktes bestimmen kann. Mit dieser Ausführungsform kann die Zieltemperatur der Vorformlinge bevorzugt so gewählt werden, dass sie der Temperatur der Vorformlinge in der Transporteinrichtung im Übergabepunkt entspricht, so dass sämtliche Vorformlinge unabhängig davon ob sie aus der Speichereinrichtung der Transporteinrichtung zugeführt werden oder in der Transporteinrichtung transportiert werden im Übergabepunkt dieselbe Temperatur aufweisen. Das Herstellen der Behälter aus den Vorformlingen kann so mit gleichbleibender Qualität erfolgen.

Der Bereich des Übergabepunktes ist hier als ein Bereich in der Transporteinrichtung zu verstehen, der sich um den Übergabepunkt erstrecken kann. Bevorzugt kann der Sensor so angeordnet sein, dass er die Temperatur der Vorformlinge unmittelbar am Übergabepunkt bestimmen kann oder in einem Bereich, der sich beispielsweise bis zu 10 oder bis zu 20 oder 50 cm stromauf oder stromab der Transporteinrichtung erstreckt. Es können auch mehrere Sensoren vorgesehen sein, die in Transportrichtung der Vorformlinge nacheinander angeordnet sind, um nicht nur die Temperatur der Vorformlinge an einem bestimmten Punkt, sondern ein Temperaturprofil der Vorformlinge während des Transports zu bestimmen. Auch dieses Temperaturprofil kann anstelle der bestimmten Temperatur genutzt werden, um die Zieltemperatur festzulegen, was gegebenenfalls mit höherer Genauigkeit möglich ist.

Die Steuereinheit kann ausgebildet sein, die Temperiereinrichtung so zu steuern, dass die Vorformlinge zu einem Übergabezeitpunkt die Zieltemperatur aufweisen.

Ist beispielsweise vorgesehen, dass die Vorformlinge aus der Speichereinrichtung zu einer bestimmten Zeit (der Übergabezeit bzw. dem Übergabezeitpunkt) an die Transporteinrichtung übergeben werden, so kann die Temperiereinrichtung angeschaltet und/oder ausgeschaltet und/oder hinsichtlich ihrer Leistung so gesteuert werden, dass die Vorformlinge mit Erreichen des Übergabezeitpunktes die Zieltemperatur aufweisen. Da der Speichereinrichtung die Vorformlinge üblicherweise zu unterschiedlichen Zeiten zugeführt werden, kann die Temperiereinrichtung entweder so gesteuert werden, dass die Vorformlinge im Mittel (im Durchschnitt über die Temperatur einer Vielzahl von Vorformlingen, die sich gleichzeitig in der Speichereinrichtung befinden, dieser aber zu unterschiedlichen Zeitpunkten zugeführt wurden) die gewünschte Zieltemperatur aufweisen oder die Temperiereinrichtung kann so ausgeführt sein, dass sie zu unterschiedlichen Zeit zugeführte Vorformlinge unterschiedlich temperieren kann, indem beispielsweise mehrere unabhänglich voneinander steuerbare Heizstrahler vorgesehen sind, die bestimmte Bereich der Speichereinrichtung, denen die Vorformlinge abhängig von ihrer Zuführzeit an die Speichereinrichtung zugeführt werden, beheizen können. Hiermit kann Energie eingespart werden, da die Temperiereinrichtung so gesteuert werden kann, dass nur die für das Erreichen der Zieltemperatur nötige Wärmeenergie abgegeben wird.

Es kann vorgesehen sein, dass die Steuereinheit ausgebildet ist, die Temperiereinrichtung abhängig von einem geplanten Betriebsende der Herstellungsmaschine so zu steuern, dass die Vorformlinge bei dem geplanten Betriebsende die Zieltemperatur aufweisen.

Das geplante Betriebsende kann beispielsweise einen Zeitpunkt einer Sortenumstellung der Behälter oder ein Wartungsintervall oder eine sonstige Unterbrechung des Betriebs der Herstellungsmaschine sein. Das Betriebsende der Herstellungsmaschine ist in diesem Fall nicht gleichbedeutend mit dem Betriebsende der Anlage, sondern bedeutet lediglich, dass die Herstellungsmaschine keine weiteren Vorformlinge herstellt. Da jedoch in der Speichereinrichtung noch Vorformlinge vorhanden sein können, können diese nach Betriebsende der Herstellungsmaschine von der Blasformmaschine weiterverarbeitet werden. Hierdurch wird das Zuführen der Vorformlinge aus der Speichereinrichtung an die Transporteinrichtung während des Betriebs vereinfacht und gleichzeitig Ausschuss minimiert, da die Vorformlinge bevorzugt vollständig zu Behältern ausgeformt werden.

Die Anlage kann so ausgebildet sein, dass die Vorformlinge der Transporteinrichtung aus der Speichereinrichtung zugeführt werden, wenn sich stromauf des Übergabepunktes in der Transporteinrichtung keine Vorformlinge mehr befinden.

Nach Betriebsende der Herstellung der Maschinen werden die Vorformlinge aus der Herstellungsmaschine noch der Blasformmaschine zugeführt, ohne dass weitere neue Vorformlinge aus der Herstellungsmaschine nachrücken. Dies führt dazu, dass eine gewisse Zeit nach Betriebsende der Herstellungsmaschine keine Vorformlinge mehr stromauf des Übergabepunktes vorhanden sind, so dass die Vorformlinge aus der Speichereinrichtung ungehindert der Transporteinrichtung zugeführt werden können.

Erfindungsgemäß ist weiterhin ein Verfahren zum Herstellen von Behältern aus Vorformlingen mit einer Anlage vorgesehen, die Anlage umfassend eine Herstellungsmaschine zum Herstellen von Vorformlingen, eine Blasformmaschine zum Herstellen von Behältern aus Vorformlingen, eine Transporteinrichtung zum Zuführen von Vorformlingen aus der Herstellungsmaschine an die Blasformmaschine und eine Speichereinrichtung, der Vorformlinge an einem Entnahmepunkt aus der Transporteinrichtung zugeführt und der Transporteinrichtung an einem Übergabepunkt übergeben werden können, wobei die Speichereinrichtung eine Temperiereinrichtung zum Temperieren der Vorformlinge umfasst, das Verfahren umfassend ein Zuführen von Vorformlingen aus der Speichereinrichtung an die Transporteinrichtung, wenn sich stromauf des Übergabepunktes zumindest zeitweise keine Vorformlinge befinden.

Mit diesem Verfahren kann ein zuverlässiges Herstellen von Behältern aus Vorformlinge bei gleichzeitig reduziertem Ausschuss erreicht werden.

Es kann vorgesehen sein, dass der Entnahmepunkt stromauf oder stromab des Übergabepunktes in Transportrichtung der Vorformlinge in der Transporteinrichtung angeordnet ist. Die Anordnung von Entnahmepunkt und Übergabepunkt kann nach Zweckmäßigkeit gewählt werden, um so einen zuverlässigen Betrieb der Anlage sicherzustellen.

Es kann vorgesehen sein, dass die Anlage eine Steuereinheit umfasst, die die Temperiereinrichtung abhängig von einer Zieltemperatur der Vorformlinge steuert. Ein zuverlässiges Herstellen von Behältern aus Vorformlingen aus der Speichereinrichtung wird hiermit gewährleistet.

Weiterhin kann vorgesehen sein, dass die Anlage einen Sensor zum Bestimmen einer Temperatur von Vorformlingen in der Transporteinrichtung umfasst und wobei die Zieltemperatur abhängig von der bestimmten Temperatur ist, wobei optional der Sensor so angeordnet ist, dass er die Temperatur der Vorformlinge in einem Bereich des Übergabepunktes bestimmt.

Mit dieser Ausführungsform wird die gleichbleibende Qualität der aus Vorformlingen hergestellten Behälter gewährleistet, ungeachtet dessen ob sie direkt aus der Herstellungsmaschine der Blasformmaschine zuführt werden, oder ob sie in der Speichereinrichtung zwischengelagert werden.

In einer Ausführungsform ist vorgesehen, dass die Steuereinheit die Temperiereinrichtung so steuert, dass die Vorformlinge zu einem Übergabezeitpunkt die Zieltemperatur aufweisen. Die notwendige Energie für das Temperieren der Vorformlinge kann hiermit reduziert werden.

Es kann vorgesehen sein, dass die Steuereinheit die Temperiereinrichtung abhängig von einem geplanten Betriebsende der Herstellungsmaschine so steuert, dass die Vorformlinge bei dem geplanten Betriebsende die Zieltemperatur aufweisen. Ein komplikationsfreies Zuführen der in der Speichereinrichtung vorgehaltenen Vorformlinge an die Transporteinrichtung ist hiermit möglich.

Die Steuereinheit kann das Betriebsende basierend auf einer Anzahl Vorformlingen in der Speichereinrichtung und/oder basierend auf einer Anzahl herzustellender Behälter bestimmen. Mit dieser Ausführungsform kann sichergestellt werden, dass ausreichend Behälter hergestellt werden und gleichzeitig Ausschuss minimiert wird.

### Kurze Beschreibung der Figuren

- Fig. 1: zeigt eine schematische Ansicht einer Anlage gemäß einer Ausführungsform.
- Fig. 2: zeigt ein Fließschema eines Verfahrens zum Steuern der Temperiereinrichtung zum Erreichen einer Zieltemperatur der Vorformlinge.
- Fig. 3: zeigt ein Fließschema eines Verfahrens zum Steuern der Temperiereinrichtung und zum Zuführen der Vorformlinge an die Speichereinrichtung bei einem Betriebsende der Herstellungsmaschine.

### Ausführliche Beschreibung

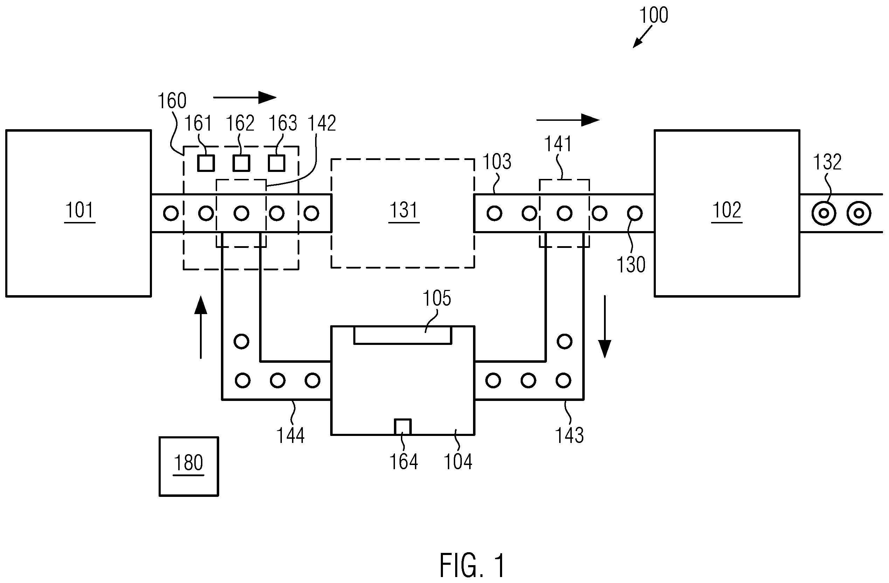

Fig. 1 zeigt eine Anlage zum Herstellen von Behältern 132 aus Vorformlingen 130.

Die Anlage umfasst eine Herstellungsmaschine 101, mit der Vorformlinge 130 hergestellt werden können. Die Herstellungsmaschine 101 kann beispielsweise als Spritzgussmaschine ausgeführt sein, in der erhitztes Vorformlingsausgangsmaterial (beispielsweise PET) einem Werkzeug zugeführt wird, in dem die Vorformlinge durch Einspritzen des erhitzten Vorformlingsausgangsmaterials gebildet werden. Anschließend können die Vorformlinge optional abkühlen und aus dem Werkzeug entnommen werden. Anstelle einer Spritzgussmaschine kann auch eine Injection Moulding Maschine oder eine Compression Moulding Maschine als Herstellungsmaschine genutzt werden. Alle diese Maschinen sind grundsätzlich aus dem Stand der Technik bekannt und werden hier hinsichtlich ihrer weiteren Ausgestaltung nicht weiter beschrieben. Die Erfindung ist grundsätzlich bezüglich der Ausgestaltung der Herstellungsmaschine nicht beschränkt.

Die Anlage 100 umfasst weiterhin eine Blasformmaschine 102 zum Herstellen von Behältern 132 aus den Vorformlingen 130. Die Blasformmaschine 102 kann beispielsweise als Streckblasmaschine ausgeführt sein und durch Einwirkung von Druckluft und/oder einer Reckstange in dem Innenraum des Vorformlings ein Expandieren des Vorformlings bewirken, so dass sich dessen äußere Oberfläche an die Innenwand einer Blasform der Blasformmaschine anlegt. Entsprechende Blasformmaschinen sind aus dem Stand der Technik hinreichend bekannt und die Blasformmaschine 102 kann insbesondere als Rundläufermaschine mit einem Karussell, das um eine Rotationsachse drehbar gelagert ist und an dessen Peripherie eine Anzahl von Blasformen zum Aufnehmen und Ausformen von Vorformlingen zu Behältern angeordnet ist, ausgeführt sein. Die Erfindung ist diesbezüglich jedoch nicht beschränkt und jede Blasformmaschine, mit der Behälter aus Vorformlingen hergestellt werden können, kann vorgesehen sein.

Erfindungsgemäß ist eine Transporteinrichtung 103 vorgesehen, mit der die Vorformlinge von der Herstellungsmaschine 101 der Blasformmaschine 102 zugeführt werden. Die Transporteinrichtung 103 kann grundsätzlich beliebig ausgestaltet sein. Insbesondere kann die Transporteinrichtung 103 einen Luftförderer umfassen, mit dem die Vorformlinge beispielsweise zwischen Luftförderschienen an ihrem Tragring hängend und durch Erzeugen einer Druckluftströmung in Richtung der Blasformmaschine transportiert werden. Alternativ oder zusätzlich kann auch ein in Transportrichtung nach unten (in Richtung der Schwerkraft) geneigter Transporteur vorgesehen sein, in dem die Vorformlinge allein oder im Wesentlichen aufgrund der auf sie wirkenden Schwerkraft transportiert werden können. Alternativ oder zusätzlich können auch ein oder mehrere Drehsterne vorgesehen sein, die die Vorformlinge beispielsweise durch individuell betätigbare Klammern am Umfang der Drehsterne aufnehmen und von der Herstellungsmaschine 101 in Richtung der Blasformmaschine befördern können. Ebenfalls denkbar sind Transporteinrichtungen, die Vorformlinge unter Ausnutzung elektromagnetischer Kräfte transportieren. Hier können insbesondere Langstatoren mit darauf beweglichen angeordneten Movern, die einen oder mehrere Vorformlinge transportieren können, vorgesehen sein. Es können auch Kombinationen dieser oder anderer Transporteinrichtungen vorgesehen sein, die ein Überführen der Vorformlinge von der Herstellungsmaschine an die Blasformmaschine 102 ermöglichen.

Optional kann entweder im Bereich der Transporteinrichtung oder als Teil der Herstellungsmaschine 101 eine hier nur schematisch dargestellte Sortiereinrichtung 131 angeordnet sein, die die aus der Herstellungsmaschine 101 kommenden Vorformlinge sortiert. Unter dem Sortieren von Vorformlinge ist jede Manipulation der Anordnung der Vorformlinge zu verstehen, die den Vorformlingen von einer Ausgangsausrichtung oder Anordnung (diese kann geordnet oder ungeordnet, insbesondere willkürlich oder chaotisch sein) ausgehend eine neue Ausrichtung oder Anordnung aufprägt. Wenn die Vorformlinge in der Herstellungsmaschine 101 beispielsweise in einem regelmäßigen Muster in Form einer zweidimensionalen Matrix in einem Werkzeug hergestellt und anschließend einem ungeordneten Vorrat übergeben, kann die Sortiereinrichtung 131 so ausgeführt sein, dass sie nach Übernahme der ungeordneten Vorformlinge die Vorformlinge so ausrichtet, dass diese der Transporteinrichtung 103 beispielsweise alle hängend an ihrem Tragring und so ausgerichtet, dass der Öffnungsbereich des Vorformlings nach oben zeigt, übergeben werden. Zu diesem Zweck kann vorgesehen sein, dass die Transporteinrichtung 103 beispielsweise zweiteilig ausgeführt ist, wobei ein erster Teil der Transporteinrichtung sich von der Herstellungsmaschine 101 bis zur Sortiereinrichtung 131 erstreckt. Dieser Teil der Transporteinrichtung kann beispielsweise einen ungeordneten Transport von aus der Herstellungsmaschine kommenden Vorformlingen ermöglichen und beispielsweise als Förderband ausgeführt sein. In der Sortiereinrichtung 131 können diese Vorformlinge dann sortiert werden und anschließend mit der vorgesehenen Ausrichtung einem zweiten Teil der Transporteinrichtung 103 zugeführt werden, der dann beispielsweise als Luftförderer und/oder ein oder mehrere Drehsterne umfassend ausgeführt sein kann.

Die Sortiereinrichtung ist dabei so vorgesehen, dass sie eine Übergabe an den zweiten Teil der Transporteinrichtung ermöglichen kann. Solche Sortiereinrichtungen sind aus dem Stand der Technik grundsätzlich bekannt und umfassen beispielsweise Rollensortierer oder Scheibensortierer.

Die Blasformmaschine 102 kann optional auch eine Heizeinrichtung umfassen, die stromauf eines Blasformbereichs, indem die Vorformlinge zu Behältern ausgeformt werden, angeordnet ist. Die Heizeinrichtung kann einen oder mehrere Heizstrahler, beispielsweise Infrarotstrahler oder Mikrowellenstrahler umfassen, die die Vorformlinge auf eine bestimmte Temperatur temperieren können, nachdem sie dieser Heizeinrichtung aus der Transporteinrichtung 103 übergeben wurden. Dabei kann auch das Einprägen eines gewünschten Temperaturprofils (eines Temperaturverlaufs beispielsweise entlang der Länge des Vorformlings) in den Vorformling vorgesehen sein.

Erfindungsgemäß umfasst die Anlage 100 weiterhin eine Speichereinrichtung 104, der Vorformlinge zugeführt werden können. Dies erfolgt, indem die Vorformlinge an einem Entnahmepunkt 141 aus der Transporteinrichtung 103 entnommen und beispielsweise über eine geeignete Transporteinrichtung 143 der Speichereinrichtung 104 zugeführt werden. Die Transporteinrichtung 143 (auch Abführtransporteinrichtung) ist mit der Transporteinrichtung 103 derart verbunden, das bevorzugt selektiv Vorformlinge aus der Transporteinrichtung 103 im Entnahmepunkt 141 entnommen und der Transporteinrichtung 143 zugeführt werden können. Dies kann beispielsweise realisiert werden, indem in einem Luftförderer zum Befördern der Vorformlinge als Transporteinrichtung 103 eine Weiche angeordnet ist, so dass in dem Entnahmepunkt 141 ein Abzweigen des Luftförderers in Richtung der Speichereinrichtung 104 möglich ist. Wird die Weiche umgestellt und/oder ein Blockierelement betätigt, um die Transporteinrichtung 103 stromab der Weiche zu blockieren, kann ein Umlenken der Vorformlinge in die Transporteinrichtung 143 erfolgen.

Ist die Transporteinrichtung 103 als eine Reihe von Drehsternen ausgebildet, so kann vorgesehen sein, dass ein Drehstern im Entnahmepunkt 141 angesteuert werden kann, um die Vorformlinge entweder einem nachfolgenden Drehstern in Transportrichtung in Richtung der Blasformmaschine 102 zu übergeben oder die Vorformlinge an einen Drehstern der Transporteinrichtung 143 zu übergeben, so dass diese der Speichereinrichtung 104 zugeführt werden können.

Weiterhin ist vorgesehen, dass Vorformlinge aus der Speichereinrichtung 104 in einem Übergabepunkt 142 der Transporteinrichtung 103 erneut zugeführt werden können. Dafür kann analog zur Transporteinrichtung 143 eine weitere Transporteinrichtung 144 (auch Zuführtransporteinrichtung) vorgesehen sein, die die Vorformlinge aus der Speichereinrichtung 104 entnehmen und im Übergabepunkt 142 der Transporteinrichtung 103 zuführen kann. Dies kann analog zu der Ausgestaltung der Transporteinrichtung 143 im Entnahmepunkt 141 realisiert werden. Alternativ kann beispielsweise vorgesehen sein, dass, für den Fall, dass die Transporteinrichtung 103 stromauf einer Sortiereinrichtung 131 als Vorrichtung zum ungeordneten Transport der Vorformlinge vorgesehen ist, die weitere Transporteinrichtung 144 ebenfalls zum ungeordneten Transport der Vorformlinge aus der Speichereinrichtung 104 ausgestaltet ist, beispielsweise als Rutsche, auf der die Vorformlinge entlang eines Gefälles von der Speichereinrichtung 104 in Richtung des Übergabepunktes 142 gefördert werden können.

Die Speichereinrichtung 104 kann zum geordneten oder ungeordneten Speichern bzw. Lagern von Vorformlingen ausgeführt sein. Ist die Speicherreinrichtung 104 zum geordneten Speichern der Vorformlinge ausgeführt, kann die Speichereinrichtung beispielsweise als eine Speicherschiene oder als Puffersystem ausgeführt sein, indem die Vorformlinge mit einer bestimmten Ausrichtung vorgehalten werden. Ist die Speichereinrichtung 104 zum Speichern von Vorformlingen in Form eines ungeordneten Vorrats ausgebildet, so kann vorgesehen sein, dass die Speichereinrichtung beispielsweise einen Aufnahmebehälter, wie ein Silo oder Ähnliches umfasst, dem die Vorformlinge zugeführt und in dem sie ungeordnet bzw. ohne aufgezwungene Ordnung aufbewahrt werden. In dieser Ausführungsform ist es besonders vorteilhaft, wenn die weitere Transporteinrichtung 144 zum ungeordneten Transport der Vorformlinge ausgebildet ist.

Erfindungsgemäß umfasst die Speichereinrichtung eine Temperiereinrichtung 105, zum Temperieren der Vorformlinge in der Speichereinrichtung 104. Die Temperiereinrichtung 105 kann beispielsweise einen oder mehrere Mikrowellenstrahler oder Infrarotstrahler umfassen oder auch ein Warmluftgebläse umfassen, mit denen die Vorformlinge mit Wärmeenergie beaufschlagt werden können.

Ist die Speichereinrichtung beispielsweise als Speichereinrichtung zum geordneten Speichern der Vorformlinge ausgeführt (wie oben beschrieben), kann vorgesehen sein, dass die Temperiereinrichtung 105 entlang einer Transportrichtung der Vorformlinge in der Speichereinrichtung 104 mehrere Heizelemente, wie etwa die beschriebenen Mikrowellenstrahler und/oder Infrarotstrahler umfasst. Deren Temperatur und/oder abgegebene Wärmeleistung kann dann so gesteuert werden, dass in Transportrichtung der Vorformlinge in der Speichereinrichtung stromab angeordnete Heizelemente jeweils eine höhere Temperatur aufweisen, als das unmittelbar stromauf angeordnete Heizelement. Dabei kann jedes Heizelement einen einzelnen Mikrowellenstrahler und/oder Infrarotstrahler (oder ähnliche Wärmequelle) umfassen oder jedes Heizelement kann im Sinne einer Gruppe auch mehrere, auf dieselbe Temperatur und/oder Wärmeleistung eingestellte Wärmequellen (Mikrowellenstrahler und/oder Infrarotstrahler o.ä.) umfassen.

In der Fig. 1 dargestellten Ausführungsform befindet sich der Entnahmepunkt 141 stromab des Übergabepunktes 142. Dies ist so jedoch nicht zwingend. Der Entnahmepunkt 141 kann gesehen in Transportrichtung der Vorformlinge in der Transportrichtung 103 auch stromauf des Übergabepunktes 142 angeordnet sein. Der Abstand zwischen dem Übergabepunkt und dem Entnahmepunkt ist erfindungsgemäß nicht beschränkt, erstreckt sich jedoch bevorzugt so, dass, sofern eine Sortiereinrichtung 131 vorgesehen ist, der Entnahmepunkt nach der Sortiereinrichtung (stromab) in der Transporteinrichtung 103 angeordnet ist und der Übergabepunkt stromauf der Sortiereinrichtung 131 in Transportrichtung der Vorformlinge in der Transporteinrichtung 103. Hierdurch wird ermöglicht, dass die aus der Transporteinrichtung 103 der Speichereinrichtung zugeführten Vorformlinge ungeordnet in der Speichereinrichtung gespeichert werden können. Dies kann die Aufbewahrung der Vorformlinge erleichtern.

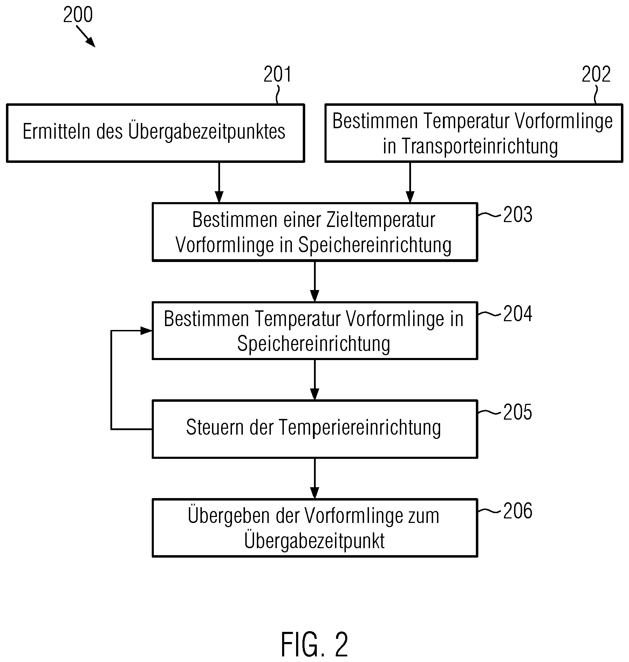

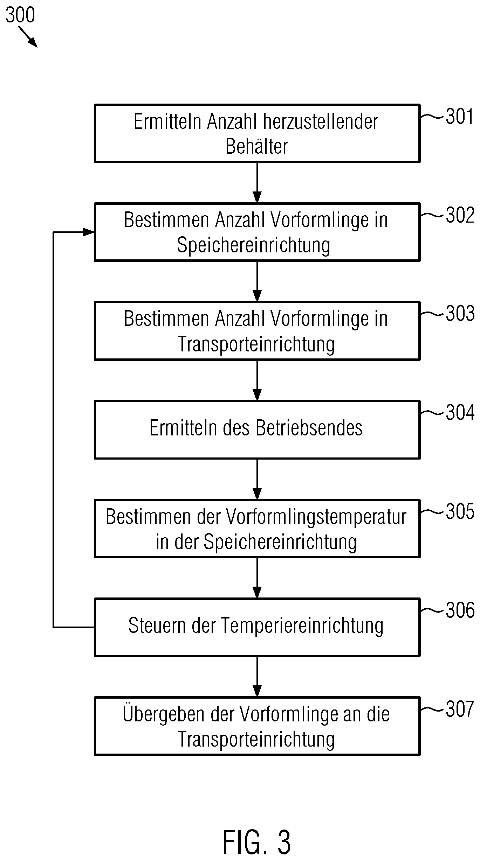

Optional kann eine Steuereinheit 180 beispielsweise in Form eines Computers mit zugeordnetem Speicher und Prozessor als Teil der Anlage vorgesehen sein, die ausgebildet sein kann, die Temperiereinrichtung 105 und/oder das Abführen von Vorformlingen aus der Transporteinrichtung 103 an die Speichereinrichtung 104 und/oder das Zuführen von Vorformlingen an die Transporteinrichtung aus der Speichereinrichtung zu steuern. Dies kann beispielsweise umfassen, dass die Steuereinheit die Temperiereinrichtung abhängig von bestimmten weiteren Parametern, beispielsweise einer zu erreichenden (Ziel-)Temperatur der Vorformlinge, wenn diese der Transporteinrichtung aus der Speichereinrichtung übergeben werden, oder das Temperieren der Vorformlinge auf eine Temperatur, die sie bei einem Betriebsende der Herstellungsmaschine annehmen sollen, steuert. Dies wird noch in Bezug auf die Fig. 2 und 3 weitere beschrieben.

Um ein Steuern der Temperiereinrichtung 105 durch die Steuereinheit 180 zu ermöglichen, kann vorgesehen sein, dass ein oder mehrere Sensoren 161 bis 163 im Bereich der Transporteinrichtung 103 angeordnet sind, um die Temperatur der Vorformlinge in der Transporteinrichtung zu bestimmen. Optional kann auch ein weiterer Sensor 164 im Bereich der Speichereinrichtung vorgesehen sein, um die Temperatur der Vorformlinge in der Speichereinrichtung 104 zu bestimmen. Anstelle eines Sensors 164 im Bereich der Speichereinrichtung 104 kann auch eine Vielzahl von Sensoren 164 in der Speichereinrichtung 104 vorgesehen sein, um ein genaues Messen der Temperatur sämtlicher Vorformlinge in der Speichereinrichtung zu ermöglichen. Dies kann insbesondere im Falle eines ungeordneten Speicherns der Vorformlinge in der Speichereinrichtung vorteilhaft sein.

In einer Ausführungsform ist besonders vorteilhaft, wenn der eine oder die Sensoren 161 bis 163 zum Bestimmen der Temperatur der Vorformlinge in der Transporteinrichtung 103 in einem Bereich 160 des Übergabepunktes 142 so angeordnet sind, dass sie die Temperatur der Vorformlinge in der Transporteinrichtung 103 in diesem Bereich 160 bestimmen können. Dies kann vorteilhaft genutzt werden, um die Temperatur der Vorformlinge in dem Übergabepunkt oder im Bereich 160 zu ermitteln und die Steuereinheit 180 kann ausgebildet sein, basierend auf dieser Temperatur die Temperiereinrichtung 105 so zu steuern, dass die Vorformlinge, die aus der Speichereinrichtung der Transporteinrichtung 103 im Übergabepunkt übergeben werden, im Wesentlichen dieselbe Temperatur wie die Vorformlinge 130 in dem Übergabepunkt aufweisen.

Dass die Vorformlinge im Wesentlichen dieselbe Temperatur aufweisen kann umfassen, dass die Vorformlinge entweder identische Temperatur aufweisen oder eine Temperaturdifferenz von bis zu +/- 0,2K oder bis zu +/-0,5K, verglichen mit den Vorformlingen in der Transporteinrichtung 103 für die der Transporteinrichtung 103 zugeführten Vorformlinge zulässig ist. Die Temperiereinrichtung 105 kann basieren darauf dann von der Steuereinheit 180 so gesteuert werden, dass die Vorformlinge die gewünschte Zieltemperatur aufweisen. Diese kann entweder bereits identisch zu der Temperatur der Vorformlinge in der Transporteinrichtung 103 sein oder geringfügig höher liegen, beispielsweise um einen Wärmeverlust der Vorformlinge beim Transport von der Speichereinrichtung bis zum Übergabepunkt zu kompensieren.

Fig. 2 zeigt ein Fließschema einer Ausführungsform eines Verfahrens zum Steuern der Temperiereinrichtung basierend auf einem Übergabezeitpunkt der Vorformlinge aus der Speichereinrichtung an die Transporteinrichtung. Dieses Verfahren kann mit der Anlage entsprechend jeder der im Zusammenhang mit Figur 1 beschriebenen Ausführungsformen durchgeführt werden.

Das Verfahren umfasst zunächst ein Ermitteln eines gewünschten Übergabezeitpunktes von Vorformlingen aus der Speichereinrichtung an die Transporteinrichtung. Dieser Übergabezeitpunkt kann beispielsweise basierend auf einer Pause oder Produktionsunterbrechung der Herstellungsmaschine 101 (siehe Fig. 1) gewählt werden oder basierend auf einer Lücke in dem Fluss der Vorformlinge in der Transporteinrichtung 103 bestimmt werden. Der Übergabezeitpunkt kann auch in festgelegten Intervallen (beispielsweise alle 30min oder jede Stunde oder alle zwei Stunden) wiederkehrend festgelegt sein oder abhängig von einem Füllstand der Speichereinrichtung je nach Bedarf bestimmt werden, um beispielsweise zu vermeiden, dass die Speichereinrichtung überfüllt wird. Auch ein Festlegen des Übergabezeitpunktes nach Tageszeit (etwa abhängig von Stromkosten bereits diskutierter externer Stromquellen oder einem zu erwartenden Leistungsüberschuss dieser externen Stromquellen) ist denkbar. Zusätzlich kann im Schritt 202 die Temperatur der Vorformlinge in der Transporteinrichtung, insbesondere im Übergabepunkt (siehe Fig. 1) ermittelt werden.

Basierend auf dem ermittelten Übergabezeitpunkt und/oder der bestimmten Temperatur der Vorformlinge in der Transporteinrichtung in den Schritten 201 und 202 kann im Schritt 203 dann beispielsweise durch die Steuereinheit 180 eine Zieltemperatur der Vorformlinge in der Speichereinrichtung bestimmt werden. Die Zieltemperatur kann dabei (insbesondere aber nicht ausschließlich bei einem geordneten Speichern der Vorformlinge in der Speichereinrichtung) für alle oder nur eine echte Teilmenge der Vorformlinge in der Speichereinrichtung (beispielsweise eine Anzahl von Vorformlingen, die der Transporteinrichtung während einer Produktionsunterbrechung der Herstellungsmaschine von bestimmter Dauer zugeführt werden kann) festgelegt werden. Die Zieltemperatur wird üblicherweise größer, höchstens jedoch gleich der Temperatur der Vorformlinge in der Transporteinrichtung (beispielsweise im Übergabepunkt) sein und kann von der Steuereinheit nicht nur abhängig von der bestimmten Übergabezeit und/oder der bestimmten Temperatur der Vorformlinge in der Transporteinrichtung bestimmt werden, sondern beispielsweise auch basierend auf weiteren der Steuereinheit verfügbaren Informationen beruhen, wie etwa einer Umgebungstemperatur oder einem zu erwartenden Wärmeverlust der Vorformlinge nach Verlassen der Speichereinrichtung.

Ist die Zieltemperatur bestimmt, kann anschließend ein Steuern der Temperiereinrichtung 205 derart erfolgen, dass ein Erwärmen der Vorformlinge (entweder aller Vorformlinge oder der Teilmenge) auf die Zieltemperatur bewirkt wird. Dazu kann die Temperiereinrichtung im Schritt 205 beispielsweise so gesteuert werden, dass sie ein Erwärmen der Vorformlinge oder der Teilmenge in der bis zum Übergabezeitpunkt noch verfügbaren Zeit auf die Zieltemperatur erreichen kann. Dies kann entweder dadurch gewährleistet werden, dass die Steuereinheit die Temperiereinrichtung zum Ausbringen einer vorgegebenen Wärmemenge pro Zeiteinheit ansteuert oder durch einen Regelkreis bewirkt werden. Dieser Regelkreis kann umfassen, dass in Schritt 204 zunächst eine Temperatur der Vorformlinge oder der Teilmenge in der Speichereinrichtung bestimmt wird und optional mit der Zieltemperatur verglichen wird. Basierend auf der Temperaturdifferenz der Vorformlinge in der Speichereinrichtung und der Zieltemperatur sowie unter Berücksichtigung der noch bis zum Übergabezeitpunkt verfügbaren Zeit kann die Steuereinheit dann ermitteln, wieviel Wärme in dieser Zeit auf die Vorformlinge oder der Teilmenge übertragen werden muss, um sie auf die Zieltemperatur zu erwärmen. Basierend darauf kann dann die Temperiereinrichtung gesteuert werden.

Nachdem eine bestimmte Zeit verstrichen ist (beispielsweise wenige Sekunden oder Minuten), kann dann erneut die Temperatur der Vorformlinge oder der Teilmenge in der Speichereinrichtung bestimmt werden und durch Überprüfen, welche Temperatur die Vorformlinge aufweisen, ein weiteres Steuern der Temperiereinrichtung erfolgen, um, falls nötig, ein schnelleres oder langsameres Erwärmen der Vorformlinge oder der Teilmenge zu bewirken. So kann abhängig vom Füllstand der Speichereinrichtung beispielsweise eine erhöhte Wärmeabgabe der Temperiereinrichtung notwendig sein, um in der vorgegebenen Zeit bis zum Übergabezeitpunkt die Vorformlinge oder der Teilmenge in der Speichereinrichtung auf die gewünschte Temperatur zu erwärmen. Dem kann durch den beschriebenen Regelkreis Rechnung getragen werden.

Haben die Vorformlinge oder der Teilmenge der Vorformlinge die Zieltemperatur erreicht, können sie zum Übergabezeitpunkt an die Transporteinrichtung übergeben werden (206). Abhängig davon, ob alle Vorformlinge oder nur eine Teilmenge der Vorformlinge in der Speichereinrichtung zum Übergabezeitpunkt an die Transporteinrichtung übergeben werden, ist die Speichereinrichtung nach Abschluss der Übergabe leergefahren oder enthält noch Vorformlinge. In letzterem Fall kann vorgesehen sein, dass in einem nächsten Fall, in dem Vorformlinge erneut der Transporteinheit übergeben werden sollen, zunächst die verbliebenen Vorformlinge und anschließend in der Zwischenzeit neu der Speichereinrichtung zugeführte Vorformlinge von der Temperiereinrichtung erwärmt werden. So wird die Standzeit von Vorformlingen in der Speichereinrichtung möglichst gering gehalten.

Fig. 3 zeigt eine weitere Ausführungsform eines Verfahrens zum Steuern der Temperiereinrichtung und Übergeben der Vorformlinge an die Transporteinrichtung zur Herstellung von Behältern aus diesen Vorformlingen. In dieser Ausführungsform ist ein Betriebsende der Herstellungsmaschine (siehe Fig. 1) vorgesehen. Gleichzeitig soll eine bestimmte Anzahl von Behältern hergestellt werden.

Das Verfahren 300 beginnt in Schritt 301 in dieser Ausführungsform mit einer Ermittlung der Anzahl der herzustellenden Behälter. Diese Anzahl der herzustellenden Behälter kann beispielsweise eine Restanzahl herzustellender Behälter sein. Wird beispielsweise für einen Auftrag eine Gesamtanzahl von Behältern von 150.000 gefordert, und wurden bisher 100.000 Behälter hergestellt, so ist die Herstellung weiterer 50.000 Behälter erforderlich.

Da stromauf der Blasformmaschine Vorformlinge nicht nur aus der Herstellungsmaschine zugeführt werden, sondern auch in der Speichereinrichtung verfügbar sein können, können in den Schritten 302 und 303 die Anzahl der Vorformlinge in der Speichereinrichtung und die Anzahl der Vorformlinge in der Transporteinrichtung bestimmt werden. Anhand dieser Anzahl kann ermittelt werden, ob durch die Herstellungsmaschine noch weitere Vorformlinge erzeugt werden müssen. Beträgt die Gesamtanzahl der Vorformlinge in der Speichereinrichtung und der Transporteinrichtung entsprechend den Schritten 302 und 303 beispielsweise 25.000, so ist noch das Herstellen weiterer 25.000 Vorformlinge mit der Herstellungsmaschine erforderlich. Während die Schritte 302 und 303 hier nacheinander dargestellt sind, ist auch ein gleichzeitiges Durchführen dieser Schritte oder eine vertauschte Reihenfolge dieser Schritte denkbar.

Im Schritt 304 wird basierend auf der Anzahl herzustellender Behälter und/oder der Anzahl der Vorformlinge in der Speichereinrichtung und/oder der Anzahl der Vorformlinge in der Transporteinrichtung dann ein Betriebsende der Herstellungsmaschine bestimmt. Dieses Betriebsende definiert, wann die Herstellungsmaschine die Herstellung von Vorformlingen beendet. Dies kann entweder ein vollständiges Betriebsende sein (also der Zeitpunkt, zu dem die Herstellungsmaschine alle herzustellenden Behälter hergestellt hat) oder eine Betriebspause (beispielsweise nach Herstellen einer bestimmten Teilmenge Anzahl herzustellender Behälter) sein, nach deren Ende die Herstellungsmaschine weitere Vorformlinge herstellt. Mehrere solcher Betriebspausen können vorgesehen sein, bis die Anzahl herzustellender Behälter erreicht ist.

Die Zeit bis zu diesem Betriebsende kann beispielsweise als Vielfaches eines Betriebszyklus angegeben werden, wobei ein Betriebszyklus genau einen Herstellungszyklus der Herstellungsmaschine umfasst. Alternativ kann die Zeit bis zum Betriebsende auch als Zeitintervall (beispielsweise Minuten oder Stunden) dargestellt werden.

In dieser Ausführungsform ist vorgesehen, dass mit Erreichen des Betriebsendes keine weiteren Vorformlinge mehr durch die Herstellungsmaschine hergestellt werden (im Falle einer Betriebspause zumindest bis zur nächsten Wiederaufnahme des Betriebs) und stattdessen die noch in der Transporteinrichtung verbleibenden und/oder in der Speichereinrichtung vorhandenen Vorformlinge der Blasformmaschine zugeführt werden. Dazu kann besonders vorteilhaft vorgesehen sein, dass mit Erreichen des Betriebsendes und insbesondere mit Entleeren der Transporteinrichtung bis zum Übergabepunkt Vorformlinge aus der Speichereinrichtung der Transporteinrichtung zugeführt werden, da aus Richtung der Herstellungsmaschine keine weiteren Vorformlinge folgen (im Falle einer Betriebspause zumindest bis zur nächsten Wiederaufnahme des Betriebs) und somit ein ungehinderter Transport der Vorformlinge aus der Speichereinrichtung in die Transporteinrichtung erfolgen kann.

Abhängig von diesem Zeitpunkt des Betriebsendes und/oder dem Leerfahren der Transporteinrichtung bis zum Übergabepunkt kann dann im Schritt 306 die Temperiereinrichtung so gesteuert werden, dass die Vorformlinge in der Speichereinrichtung mit Erreichen des Betriebsendes eine gewünschte Temperatur (Zieltemperatur) aufweisen. Dabei kann optional im Schritt 305 anlog zum Schritt 204 der Fig. 2 ein Bestimmen der Temperatur der Vorformlinge in der Speichereinrichtung erfolgen, um auch basierend darauf die Temperiereinheit dann zu steuern.

Da das Zuführen von Vorformlingen an die Speichereinrichtung auch während des Betriebs erfolgen kann, wenn beispielsweise die Blasformmaschine unbeabsichtigt ausfällt, kann vorgesehen sein, dass die Schritte 302 bis 306 erneut in Form eines Regelkreises durchgeführt werden, wobei in regelmäßigen Abständen die Anzahl der Vorformlinge in der Speichereinrichtung und die verbleibende Anzahl der Vorformlinge in der Transporteinrichtung bestimmt werden, um das Betriebsende zu ermitteln und basieren darauf und optional der Vorformlingtemperaturen der Speichereinrichtungen die Steuerung die Temperiereinrichtungen steuert.

Im Schritt 307 erfolgt mit Erreichen des Betriebsendes und/oder nachdem die Transporteinrichtung bis zum Übergabepunkt leergefahren wurde, eine Übergabe der Vorformlinge aus der Speichereinrichtung an die Transporteinrichtung, wobei diese dann die gewünschte Temperatur aufweisen. Dabei versteht es sich, dass die Zieltemperatur der Vorformlinge beispielsweise basierend auf dem Verfahren der Fig. 2 bestimmt werden kann.

## Patentansprüche

1. Anlage zum Herstellen von Behältern aus Vorformlingen, die Anlage umfassend eine Herstellungsmaschine (101) zum Herstellen von Vorformlingen, eine Blasformmaschine (102) zum Herstellen von Behältern aus Vorformlingen, eine Transporteinrichtung zum Zuführen von Vorformlingen aus der Herstellungsmaschine an die Blasformmaschine und eine Speichereinrichtung (104), der Vorformlinge an einem Entnahmepunkt (141) aus der Transporteinrichtung zugeführt und der Transporteinrichtung an einem Übergabepunkt (142) übergeben werden können, wobei der Entnahmepunkt stromauf oder stromab des Übergabepunktes in Transportrichtung der Vorformlinge in der Transporteinrichtung angeordnet ist, und wobei die Speichereinrichtung eine Temperiereinrichtung (105) zum Temperieren der Vorformlinge umfasst,
wobei die Anlage eine Steuereinheit zum Steuern der Temperiereinrichtung abhängig von einer Zieltemperatur der Vorformlinge umfasst,
wobei die Anlage einen Sensor zum Bestimmen einer Temperatur von Vorformlingen in der Transporteinrichtung umfasst und wobei die Zieltemperatur abhängig von der bestimmten Temperatur ist, und wobei der Sensor so angeordnet ist, dass er die Temperatur der Vorformlinge in einem Bereich des Übergabepunktes bestimmen kann;
wobei die Vorformlinge am Entnahmepunkt (141) aus der Transporteinrichtung (103) entnommen und über eine Abführtransporteinrichtung (143) der Speichereinrichtung (104) zugeführt werden können und wobei die Abführtransporteinrichtung (143) mit der Transporteinrichtung (103) derart verbunden ist, dass selektiv Vorformlinge aus der Transporteinrichtung (103) im Entnahmepunkt (141) entnommen und der Abführtransporteinrichtung (143) zugeführt werden können.

2. Anlage nach Anspruch 1, wobei die Steuereinheit ausgebildet ist, die Temperiereinrichtung so zu steuern, dass die Vorformlinge zu einem Übergabezeitpunkt die Zieltemperatur aufweisen.

3. Anlage nach einem der Ansprüche 1 oder 2, wobei die Steuereinheit ausgebildet ist, die Temperiereinrichtung abhängig von einem geplanten Betriebsende der Herstellungsmaschine so zu steuern, dass die Vorformlinge bei dem geplanten Betriebsende die Zieltemperatur aufweisen.

4. Anlage nach Anspruch 3, wobei die Anlage so ausgebildet ist, dass die Vorformlinge der Transporteinrichtung aus der Speichereinrichtung zugeführt werden, wenn sich stromauf des Übergabepunktes in der Transporteinrichtung keine Vorformlinge mehr befinden.

5. Verfahren zum Herstellen von Behältern aus Vorformlingen mit einer Anlage, die Anlage umfassend eine Herstellungsmaschine zum Herstellen von Vorformlingen, eine Blasformmaschine zum Herstellen von Behältern aus Vorformlingen, eine Transporteinrichtung zum Zuführen von Vorformlingen aus der Herstellungsmaschine an die Blasformmaschine und eine Speichereinrichtung, der Vorformlinge an einem Entnahmepunkt aus der Transporteinrichtung zugeführt und der Transporteinrichtung an einem Übergabepunkt übergeben werden können, wobei der Entnahmepunkt stromauf oder stromab des Übergabepunktes in Transportrichtung der Vorformlinge in der Transporteinrichtung angeordnet ist, und wobei die Speichereinrichtung eine Temperiereinrichtung zum Temperieren der Vorformlinge umfasst, das Verfahren umfassend ein Zuführen von Vorformlingen aus der Speichereinrichtung an die Transporteinrichtung, wenn sich stromauf des Übergabepunktes zumindest zeitweise keine Vorformlinge befinden,
wobei die Anlage eine Steuereinheit umfasst, die die Temperiereinrichtung abhängig von einer Zieltemperatur der Vorformlinge steuert, und
wobei die Anlage einen Sensor zum Bestimmen einer Temperatur von Vorformlingen in der Transporteinrichtung umfasst und wobei die Zieltemperatur abhängig von der bestimmten Temperatur ist, wobei der Sensor so angeordnet ist, dass er die Temperatur der Vorformlinge in einem Bereich des Übergabepunktes bestimmt;
wobei die Vorformlinge am Entnahmepunkt (141) aus der Transporteinrichtung (103) entnommen und über eine Abführtransporteinrichtung (143) der Speichereinrichtung (104) zugeführt werden und wobei die Abführtransporteinrichtung (143) mit der Transporteinrichtung (103) derart verbunden ist, dass selektiv Vorformlinge aus der Transporteinrichtung (103) im Entnahmepunkt (141) entnommen und der Abführtransporteinrichtung (143) zugeführt werden.

6. Verfahren nach Anspruch 5, wobei die Steuereinheit die Temperiereinrichtung so steuert, dass die Vorformlinge zu einem Übergabezeitpunkt die Zieltemperatur aufweisen.

7. Verfahren nach Anspruch 6, wobei die Steuereinheit die Temperiereinrichtung abhängig von einem geplanten Betriebsende der Herstellungsmaschine so steuert, dass die Vorformlinge bei dem geplanten Betriebsende die Zieltemperatur aufweisen.

8. Verfahren nach Anspruch 6 oder 7, wobei die Steuereinheit das Betriebsende basierend auf einer Anzahl Vorformlingen in der Speichereinrichtung und/oder basierend auf einer Anzahl herzustellender Behälter bestimmt.

## Claims

1. An installation for producing containers from preforms, the installation comprising a production machine (101) for producing preforms, a blow-moulding machine (102) for producing containers from preforms, a transport device for supplying preforms from the production machine to the blow-moulding machine, and a storage device (104), to which preforms can be supplied from the transport device at a removal point (141) and from which preforms can be transferred to the transport device at a transfer point (142), wherein the removal point is arranged upstream or downstream of the transfer point in the transport direction of the preforms in the transport device, and wherein the storage device comprises a temperature-control device (105) for controlling the temperature of the preforms,
wherein the installation comprises a control unit for controlling the temperature-control device depending on a target temperature of the preforms,
wherein the installation comprises a sensor for determining a temperature of preforms in the transport to the discharge transport device (143).

2. The installation according to claim 1, wherein the control unit is configured to control the temperature-control device such that the preforms have the target temperature at a transfer time.

3. The installation according to one of claims 1 or 2, wherein the control unit is configured to control the temperature-control device depending on a planned end of operation of the production machine such that the preforms have the target temperature at the planned end of operation.

4. The installation according to claim 3, wherein the installation is configured such that the preforms are supplied from the storage device to the transport device when no preforms are present any longer in the transport device upstream of the transfer point.

5. A method for producing containers from preforms using an installation, the installation comprising a production machine for producing preforms, a blow-moulding machine for producing containers from preforms, a transport device for supplying preforms from the production machine to the blow-moulding machine, and a storage device, to which preforms can be supplied from the transport device at a removal point and from which preforms can be transferred to the transport device at a transfer point, wherein the removal point is arranged upstream or downstream of the transfer point in the transport direction of the preforms in the transport device, and wherein the storage device comprises a temperature-control device for controlling the temperature of the preforms, the method comprising supplying preforms from the storage device to the transport device when, at least temporarily, no preforms are present upstream of the transfer point,
wherein the installation comprises a control unit which controls the temperature-control device depending on a target temperature of the preforms, and
wherein the installation comprises a sensor for determining a temperature of preforms in the transport device and wherein the target temperature depends on the determined temperature, wherein the sensor is arranged such that it determines the temperature of the preforms in a region of the transfer point;
wherein the preforms are removed from the transport device (103) at the removal point (141) and supplied to the storage device (104) via a discharge transport device (143), and wherein the discharge transport device (143) is connected to the transport device (103) such that preforms are selectively removed from the transport device (103) at the removal point (141) and supplied to the discharge transport device (143).

6. The method according to claim 5, wherein the control unit controls the temperature-control device such that the preforms have the target temperature at a transfer time.

7. The method according to claim 6, wherein the control unit controls the temperature-control device depending on a planned end of operation of the production machine such that the preforms have the target temperature at the planned end of operation.

8. The method according to claim 6 6 or 7, wherein the control unit determines the end of operation based on a number of preforms in the storage device and/or based on a number of containers to be produced.

## Revendications

1. Installation de fabrication de récipients à partir de préformes, l'installation comprenant une machine de production (101) destinée à produire des préformes, une machine de moulage par soufflage (102) destinée à fabriquer des récipients à partir de préformes, un dispositif de transport destiné à acheminer des préformes de la machine de production à la machine de moulage par soufflage et un dispositif de stockage (104), auquel des préformes peuvent être acheminées depuis le dispositif de transport au niveau d'un point de prélèvement (141) et à partir duquel des préformes peuvent être transférées au dispositif de transport au niveau d'un point de transfert (142), dans laquelle le point de prélèvement est disposé en amont ou en aval du point de transfert dans la direction de transport des préformes dans le dispositif de transport, et dans laquelle le dispositif de stockage comprend un dispositif de régulation de température (105) destiné à réguler la température des préformes,
dans laquelle l'installation comprend une unité de commande destinée à commander le dispositif de régulation de température en fonction d'une température cible des préformes,
dans laquelle l'installation comprend un capteur destiné à déterminer une température de préformes dans le dispositif de transport et dans laquelle la température cible dépend de la température déterminée, et
dans laquelle le capteur est disposé de manière à pouvoir déterminer la température des préformes dans une zone du point de transfert ;
dans laquelle les préformes peuvent être prélevées du dispositif de transport (103) au niveau du point de prélèvement (141) et acheminées au dispositif de stockage (104) par l'intermédiaire d'un dispositif de transport d'évacuation (143), et dans laquelle le dispositif de transport d'évacuation (143) est relié au dispositif de transport (103) de manière à ce que des préformes puissent être prélevées sélectivement du dispositif de transport (103) au niveau du point de prélèvement (141) et acheminées au dispositif de transport d'évacuation (143).

2. Installation selon la revendication 1, dans laquelle l'unité de commande est configurée pour commander le dispositif de régulation de température de manière à ce que les préformes présentent la température cible à un instant de transfert.

3. Installation selon l'une des revendications 1 ou 2, dans laquelle l'unité de commande est configurée pour commander le dispositif de régulation de température en fonction d'une fin de fonctionnement prévue de la machine de production de manière à ce que les préformes présentent la température cible à la fin de fonctionnement prévue.

4. Installation selon la revendication 3, dans laquelle l'installation est configurée de manière à ce que les préformes soient acheminées du dispositif de stockage au dispositif de transport lorsqu'aucune préforme ne se trouve plus dans le dispositif de transport en amont du point de transfert.

5. Procédé de fabrication de récipients à partir de préformes au moyen d'une installation, l'installation comprenant une machine de production destinée à produire des préformes, une machine de moulage par soufflage destinée à fabriquer des récipients à partir de préformes, un dispositif de transport destiné à acheminer des préformes de la machine de production à la machine de moulage par soufflage et un dispositif de stockage, auquel des préformes peuvent être acheminées depuis le dispositif de transport au niveau d'un point de prélèvement et à partir duquel des préformes peuvent être transférées au dispositif de transport au niveau d'un point de transfert, dans lequel le point de prélèvement est disposé en amont ou en aval du point de transfert dans la direction de transport des préformes dans le dispositif de transport, et dans lequel le dispositif de stockage comprend un dispositif de régulation de température destiné à réguler la température des préformes, le procédé comprenant un acheminement de préformes du dispositif de stockage au dispositif de transport lorsque, au moins temporairement, aucune préforme ne se trouve en amont du point de transfert,
dans lequel l'installation comprend une unité de commande qui commande le dispositif de régulation de température en fonction d'une température cible des préformes, et
dans lequel l'installation comprend un capteur destiné à déterminer une température de préformes dans le dispositif de transport et dans lequel la température cible dépend de la température déterminée, le capteur étant disposé de manière à déterminer la température des préformes dans une zone du point de transfert ;
dans lequel les préformes sont prélevées du dispositif de transport (103) au niveau du point de prélèvement (141) et acheminées au dispositif de stockage (104) par l'intermédiaire d'un dispositif de transport d'évacuation (143), et dans lequel le dispositif de transport d'évacuation (143) est relié au dispositif de transport (103) de manière à ce que des préformes soient prélevées sélectivement du dispositif de transport (103) au niveau du point de prélèvement (141) et acheminées au dispositif de transport d'évacuation (143).

6. Procédé selon la revendication 5, dans lequel l'unité de commande commande le dispositif de régulation de température de manière à ce que les préformes présentent la température cible à un instant de transfert.

7. Procédé selon la revendication 6, dans lequel l'unité de commande commande le dispositif de régulation de température en fonction d'une fin de fonctionnement prévue de la machine de production de manière à ce que les préformes présentent la température cible à la fin de fonctionnement prévue.

8. Procédé selon la revendication 6 6 ou 7, dans lequel l'unité de commande détermine la fin de fonctionnement sur la base d'un nombre de préformes dans le dispositif de stockage et/ou sur la base d'un nombre de récipients à fabriquer.
